# DEMANDE DE BREVET EUROPEEN

(11) **EP 1 002 996 A1**
(43) Date de publication de la demande: **24.05.2000**
(21) Numéro de dépôt: 99402727.4
(22) Date de dépôt: 03.11.1999
(51) Int. Cl.: F23L 7/00, F23G 5/00

(54) **Procédé de combustion de déchets permettant de réduire les émissions de dioxines**

(30) Priorité: 17.11.1998 FR 9814413
(71) Demandeur: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Milosavljevic, Ivan, 75321 Paris Cedex 07 (FR); Arnoux, Stéphane, 75321 Paris Cedex 07 (FR); Duperray, Pascal, 75321 Paris Cedex 07 (FR); Dugue, Jacques, 75321 Paris Cedex 07 (FR); Charon, Olivier, Countryside, Ill 60525 (US); Inizan, Michel, 75321 Paris Cedex 07 (FR)
(74) Mandataire: Vesin, Jacques

(57) **Abrégé**

Procédé de combustion d'un combustible et d'un comburant, dans lequel au moins une partie du combustible comporte des produits du type hydrocarbure comprenant des atomes de carbone, hydrogène, oxygène et d'un corps dans la série des halogènes, ladite combustion engendrant des fumées de combustion.

Selon l'invention, on maintient la concentration en monoxyde de carbone dans les fumées au dessous d'une valeur d'environ 400 ppm, de préférence au dessous d'une valeur de 200 ppm environ, la quantité de comburant injectée dans la zone où se produit la combustion du combustible et du comburant étant suffisante pour créer une température dans la zone de combustion permettant l'oxydation des atomes de carbone essentiellement sous la forme de dioxyde de carbone.

## Description

La présente invention concerne un procédé permettant de réduire la concentration en hydrocarbures polyaromatiques chlorés dans les fumées, notamment les fumées issues des fours.

Elle se rapporte plus particulièrement à la réduction de la concentration en dioxine et/ou en furanes dans les effluents gazeux issus des fours de combustion dans lesquels on réalise une combustion, et notamment des incinérateurs de déchets industriels ou ménagers.

Depuis une vingtaine d'années, les dioxines et les furanes ont été identifiés comme des produits qui peuvent s'avérer dangereux pour la santé humaine et l'on se demande même à l'heure actuelle si ces produits, lorsqu'ils se déposent dans les pâturages et sont intégrés par le bétail, ne sont pas à l'origine d'une contamination de la viande issue de cette filière d'élevage.

D'une manière générale, ce sont des produits qui contiennent deux cycles halogéno-benzéniques liés par un (furane) ou deux (dioxine)atomes d'oxygène. Les dioxines et les furanes n'existent pas dans la nature. Ces produits sont formés soit dans les procédés de combustion, soit dans les sous-produits de l'industrie chimique. Au total, il y a 135 isomères de poly-chloro-dibenzo-furanes et 75 de polychloro-dibenzo-dioxines. Certaines d'entre eux sont assurément toxiques, tandis que pour les autres, le doute subsiste encore.

Pour former une molécule de dioxine ou de furane, la présence de molécules de carbone, d'oxygène, d'hydrogène et d'halogène est nécessaire. Les mécanismes de leurs formations sont compliqués et mal connus. Bien que la formation de dioxines/furanes ait été beaucoup étudiée durant les vingt dernières années, la théorie ne permet toujours pas de prédire leur formation avec suffisamment de précision dans un procédé de combustion. Par contre, des corrélations empiriques ont commencé à voir le jour. Selon ces corrélations, la manière de conduire la combustion serait un paramètre important pour former les dioxines/furanes. Mais ces corrélations apparaissent quelques fois contradictoires selon les auteurs. Ainsi par exemple, pour l'incinération d'ordures ménagères, Seeker (23^{rd} International Symposium on Combustion, pp. 867-885, 1990) aurait identifié quatre sources possibles de formation de dioxines/furanes :
- Les dioxines/furanes issus de déchets qui ne sont pas détruits dans l'incinération,
- Les dioxines/furanes formés dans la zone principale de la combustion,
- Les dioxines/furanes formés à partir des particules imbrûlées,
- Les dioxines/furanes formés à partir de précurseurs (molécules du type CₐH_{b}O_{c}X_{d} où X est un halogène), ou à partir des imbrûlés dans les cendres volantes à l'aide de catalyseurs contenus dans lesdites cendres volantes, à une température voisine de 300°C (synthèse dite de *novo).*

Par contre, Gebert et al (Steel Times, p.220, June 1995) ont constaté que la formation de dioxines/furanes dans les usines d'agglomération de minerais provient en grande partie de phénols. Selon les auteurs, la synthèse de *novo* n'est pas significative dans ces procédés d'agglomération.

Les techniques les plus souvent appliquées pour la réduction des émissions de dioxines/furanes sont les suivantes :
- Le piégeage des dioxines/furanes par du carbone ou un autre absorbant (cette technique est utilisée par injection de carbone, charbon, coke actif ou un autre absorbant dans les produits de combustion ou à l'aide d'un filtre rempli de carbone, charbon, coke actif ou un autre absorbant);
- L'oxydation des dioxines/furanes (l'oxydation peut être catalytique ou non; généralement un lit catalytique ou une chambre de postcombustion sont nécessaires);
- L'empoisonnement du catalyseur qui participe à la synthèse de *novo* (cette technique diminue l'activité du catalyseur présent dans les cendres volantes).

Le point commun à tous ces procédés est d'essayer d'éliminer les polluants déjà formés mais ils ne cherchent pas à réduire leur formation. L'élimination de ces polluants dans les fumées ne résout pas le problème de la destruction de ces produits qui doivent être stockés quelques part et qui restent donc un problème pour l'environnement.

Il est connu de DE-A-19542065 un procédé de piégeage de dioxines/furanes par un mélange de chaux et de carbone actif.

Il est connu de EP-A-736321 de piéger les dioxines/furanes issus de procédés industriels (avec l'exemple d'un four à arc) sur un lit fluidisé contenant un absorbant.

DE-A-4220239 décrit un procédé de réduction des dioxines/furanes dans les fours à arc, les fours à induction et les convertisseurs, par refroidissement, dépoussiérage et absorption.

EP-A-677319 décrit le piégeage des dioxines/furanes sur les zéolites, tandis que EP-A-6764457 décrit l'absorption de précurseurs de la formation de dioxines/furanes.

DE-A-4304323 décrit l'oxydation catalytique des dioxines/furanes. Différents systèmes de destruction des dioxines/furanes par combustion et/ou pyrolyse à l'aide d'un gaz oxydant sont décrits dans JP-A-09014867 et W096/14919.

On peut également citer JP-A-03004918 qui décrit un procédé utilisant de l'ozone et du peroxyde d'hydrogène pour l'oxydation de précurseurs de dioxines/furanes. Le peroxyde d'hydrogène est également utilisé pour l'oxydation catalytique de dioxines/furanes dans le brevet US-5463170. Un procédé et un dispositif utilisant l'enrichissement à l'oxygène et un filtre haute température (pour éliminer la synthèse « de novo » par piégeage de poussières) sont décrits dans le brevet US-5255616.

Il est connu de USP 5449854 et 5609104 un procédé et un dispositif de combustion étagée de déchets halogénés dans lequel on réalise une combustion étagée de ces déchets en réalisant une combustion à l'air des déchets halogénés de manière à créer notamment des dioxines et des furanes qui sont "dé halogénés" dans le deuxième étage de la flamme par réaction avec le combustible riche en hydrogène tout en évitant la disponibilité de l'oxygène dans ladite flamme.

Tous les procédés décrits ci-avant consistent d'une manière ou d'une autre à faire réagir les dioxines et ou les furanes après leur formation, avec différents réactifs, dont notamment des carburants hydrogénés, de manière à les retenir sur un filtre ou les détruire totalement ou en partie et réduire ainsi leur présence dans les rejets et les fumées.

Dans le cadre de la présente invention et contrairement à l'enseignement de l'art intérieur, on s'attache à éviter ou réduire la formation de dioxines et/ou de furanes (par rapport aux procédés de l'art intérieur) sachant qu'une fois formés, ces produits doivent être stockés alors qu'ils n'existent pas à l'état naturel.

Le concept à la base de la présente invention consiste à réduire, de préférence, et éliminer sensiblement ou totalement le monoxyde de carbone dans les fumées, au plus tard juste avant leur sortie du four dans lequel a lieu la combustion. On a en effet constaté que, de manière inattendue, on réduisait le présence de dioxines et/ou de furanes dans les fumées si on réduisait la concentration de monoxyde de carbone dans les fumées, au plus tard juste avant leur sortie du four où la combustion se produit. De préférence, on éliminera sensiblement la présence de monoxyde de carbone.

Selon l'invention, le taux de monoxyde de carbone sera maintenu au dessous de 400 ppm, de préférence 200 ppm. Selon un mode préférentiel de l'invention, on maintiendra ce taux de CO en dessous de 100 ppm et plus préférentiellement au dessous de 50 ppm.

De préférence, on réalise cette diminution de la concentration en CO en faisant réagir celui-ci avec de l'oxygène de manière à former du dioxyde de carbone, avant que le CO ne se trouve dans les conditions favorables pour engendrer des dioxines et/ou des furanes. Notamment, on aura complètement oxydé le monoxyde de carbone avant de se retrouver dans des conditions, notamment de température, de la synthèse dite *"de novo*". Si les fumées à la sortie du four ont une température supérieure à 800°c, il sera possible encore (et c'est une variante de l'invention) d'oxyder le CO en CO₂ dans le conduit de sortie des fumées du four avant que celles-ci n'atteignent une température à laquelle les dioxines et/ou les furanes se formeront à partir du CO plutôt qu'une réaction d'oxydation du CO.

Si l'on mesure une certaine concentration de CO dans les fumées à une température inférieure à 800°c, il est toujours possible d'augmenter celle-ci par injection d'oxygène et d'oxyder alors tout le CO en CO₂. Pour obtenir cette réaction préférentielle du CO avec l'oxygène, et éviter au contraire une formation de dioxines et/ou de furanes, il est préférable que de l'oxygène (pur ou impur avec au moins 88% d'oxygène, le reste du gaz étant préférentiellement de l'argon avec le moins d'azote possible pour éviter également la formation de NOx) soit injecté directement dans la zone de combustion du four.

Selon l'invention, on utilise le monoxyde de carbone comme un gaz "traceur" dont on va mesurer les concentrations dans les fumées dans la zone de combustion ou à proximité de cette zone notamment dans les fumées s'échappant de la zone de combustion, tel que le four.

En effet, sans vouloir être liés par une quelconque théorie, les inventeurs pensent que lors d'une combustion de produits de type hydrocarbure Cₐ H_{b} O_{c} X_{d} avec de l'air, on engendre notamment des produits de réaction qui sont :
CO₂, CO, Cₐ₁ H_{b1} O_{c1} X_{d1} (ce dernier produit représentant les précurseurs de formation de dioxines et de furanes engendrés lors de cette combustion dans de mauvaises conditions).
Une "bonne" combustion avec de l'air enrichi à l'oxygène (ou de l'oxygène pur) n'engendrerait notamment que des produits du type CO₂ et HCL mais pas de monoxyde de carbone ou de précurseurs de dioxines et/ou furanes.

L'injection d'oxygène peut se faire en tout point du four ou en amont de l'injection d'air dans le four lorsque l'on utilise de l'air enrichi en oxygène.

De préférence cependant on injectera l'oxygène dans la zone principale de la combustion et/ou dans la zone d'élaboration des cendres résultant de la combustion.

On pourra également injecter cet oxygène dans l'air dit " primaire " ou l'air dit " secondaire " ou toute autre injection d'air lorsque une telle injection existe.

Par oxygène, on entend de l'oxygène industriellement pur, c'est à dire obtenu généralement par voie cryogénique avec un résidu de quelques centaines de ppm, notamment d'azote. Cette définition de l'oxygène englobe d'une manière générale l'oxygène comportant au moins 88% en volume de molécules d'oxygène, le complément étant constitué essentiellement d'un ou plusieurs gaz inertes tels que l'azote et/ou l'argon essentiellement. De préférence, de l'oxygène comportant de 90% à 98% en volume de molécules d'oxygène sera préféré, et notamment de l'oxygène produit par des appareils dits à adsorption de type VSA (Vaccum Swing Adsorption).

L'injection d'oxygène se fait de préférence à l'aide d'un injecteur qui produira un bon mélange de l'oxygène aux autres gaz (air ou gaz de combustion) notamment grâce à un système tournant (" swirl ") produisant, une turbulence au voisinage de son injection. L'oxygène injecté sera de préférence à température ambiante mais de l'oxygène préchauffé à une température d'au moins 500°c, de préférence 800°c, peut également être utilisé.

La quantité d'oxygène injectée pour obtenir une " bonne " combustion est importante suivant l'invention :

Selon une première variante on réalise une régulation sur la concentration en monoxyde de carbone mesurée dans le four et/ou les fumées en maintenant le taux de concentration de monoxyde de carbone au dessous des valeurs indiquées précédemment.

Selon une autre variante de l'invention, on réalisera également une régulation sur la température des fumées dans le four ou à la sortie du four (ou les deux) : d'une manière générale, dès que cette température est inférieure à 850°C, on augmente le risque de formation de dioxines et/ou de furanes, même si la concentration en CO est inférieure à 50 ppm. On pourra donc augmenter l'injection d'oxygène dès que la température des fumées descend en dessous d'environ 800°C et/ou maintenir une injection d'oxygène suffisante pour maintenir une température supérieure à 800°C.

Le procédé selon l'invention est essentiellement caractérisé en ce que l'on maintient la concentration en monoxyde de carbone dans les fumées au dessous d'une valeur d'environ 400 ppm, de préférence en dessous d'une valeur d'environ 200 ppm, la quantité de comburants injectée dans la zone où se produit la combustion du combustible et du comburant étant suffisante pour créer une température dans cette zone de combustion permettant l'oxydation des atomes de carbone préférentiellement et essentiellement sous la forme de dioxyde de carbone.

On s'est effectivement rendu compte de manière inattendue qu'en contrôlant à l'aide de la concentration en CO le déroulement de la combustion dans la zone de combustion et en favorisant la formation de CO₂ tout en maintenant la concentration en CO en dessous de la valeur précitée permettait de réduire considérablement la formation de produits organochlorés tel que les dioxines et/ou les furanes. De préférence on maintient la concentration en monoxyde de carbone inférieure à 100 ppm et plus préférentiellement inférieure à environ 50 ppm.

Ainsi on a pu constater, comme on le verra ci-après dans les exemples comparatifs, que lorsque par exemple on formait une quantité X de furanes et Y de dioxines par combustion à l'air dans laquelle on analysait une concentration en CO d'environ 100 ppm, une combustion à l'oxygène ou à l'air enrichi à l'oxygène permettait de diminuer la concentration en CO aux environs de 30 ppm et de diminuer environ par 3 la concentration de furanes et/ou de dioxines.

Le procédé de l'invention peut être mis en oeuvre dans un incinérateur à grilles dans lequel les opérations de séchage et de combustion sont réalisés dans deux zones successives , respectivement la zone de séchage et la zone de combustion. Ce type d'incinérateur est équipé d'une ou plusieurs grilles pour la circulation des combustibles, de moyens pour la progression des combustibles sur lesdites grilles de la zone de séchage vers la zone de combustion, les combustibles formant un lit, ou couche non homogène, tout le long de leur progression dans l'incinérateur.

Pour plus de détails sur ces incinérateurs, on pourra se reporter à l'ouvrage intitulé " l'incinération des déchets ménagers " de J.Y. Le Goux et C. Le Douce.

Les grilles sont soit en position horizontale, soit encore, inclinées de façon à faciliter la progression des combustibles. Généralement, les moyens pour la progression des combustibles sont des pièces mobiles fixées auxdites grilles. Lesdites pièces mobiles, généralement des barreaux ou des rouleaux, sont animées d'un mouvement de translation, de rotation ou de va et vient.

L'incinérateur utilisable selon l'invention est par ailleurs muni de moyens d'injection disposés au-dessus du lit de combustibles pour l'injection d'air primaire dans les zones de séchage et de combustion. Ces moyens sont habituellement un ensemble de ventilateurs reliés à un ensemble de caissons disposés sous le lit des combustibles. Les caissons, généralement de forme conique, sont situés immédiatement au-dessous des grilles, celles-ci présentant des passages propres à la circulation de l'air en forme d'orifices, de nervures ou de canalisations, de telle sorte que de l'air puisse être insufflé au sein même de la couche de combustibles.

La configuration exacte des caissons n'est pas essentielle selon l'invention. Pour une efficacité maximale néanmoins, les caissons permettent l'injection d'air primaire au niveau de chacun des passages d'air aménagés dans les grilles, lesdits passages étant de préférence uniformément distribués sur toute la surface des grilles.

Dans la zone de séchage, les combustibles sont séchés au contact des gaz chauds de combustion, de l'air, éventuellement préchauffé, insufflé sous les grilles et des rayonnements émis par les murs de la chambre de l'incinérateur.

Les combustibles se décomposent dans cette zone en matière volatiles, généralement combustibles qui atteignent rapidement leur température d'inflammation.

La combustion se poursuit dans la zone de combustion. La fin de la zone de combustion est généralement désignée par le terme " zone d'amélioration des mâchefers " : c'est là que se termine la combustion. Idéalement, en sortie de la zone d'amélioration des mâchefers, tout le combustible a brûlé de telle sorte que l'on ne récupère que les cendres, les scories (ou mâchefers) ainsi que les matières inertes à la combustion.

Selon une variante de mise en oeuvre de l'invention avec l'incinérateur décrit ci-dessus, le procédé selon l'invention permet l'incinération de combustibles solides dans un incinérateur à grilles dans lequel les opérations de séchage et de combustion sont réalisés en ligne dans deux zones successives, l'incinérateur étant équipé (i) d'une ou plusieurs grilles pour la circulation des combustibles, (ii) de moyens pour la progression des combustibles sur lesdites grilles, de la zone de séchage, et (iii) de moyens pour l'injection d'air dans chacune desdites zones, lesdits moyens étant disposés au-dessous dudit lit de combustibles. Ce procédé comprend en outre les étapes consistant à :
a) contrôler l'injection d'air primaire dans une zone intermédiaire située en entrée de la zone de combustion ou dans une partie centrale de ladite zone de combustion, de façon à ce que la quantité d'oxygène injectée par unité de surface de grille dans ladite zone intermédiaire soit inférieure à la quantité d'oxygène nécessaire à la combustion complète des combustibles traversant ladite unité de surface ;
b) soumettre les combustibles sortant de ladite zone intermédiaire à une combustion en présence d'air enrichi en oxygène dans une zone de combustion aval.

L'opération de séchage est effectuée de façon habituelle, par injection d'air primaire, éventuellement d'air chaud, dans la zone de séchage.

La zone de combustion peut comporter notamment une zone intermédiaire et une zone combustion aval. La zone intermédiaire est située en entrée de la zone de combustion ou bien dans une partie centrale de ladite zone de combustion. Dans le cadre de la présente description, la zone de combustion aval désigne la zone située en sortie de la zone intermédiaire et débouchant sur le dispositif d'évacuation des mâchefers.

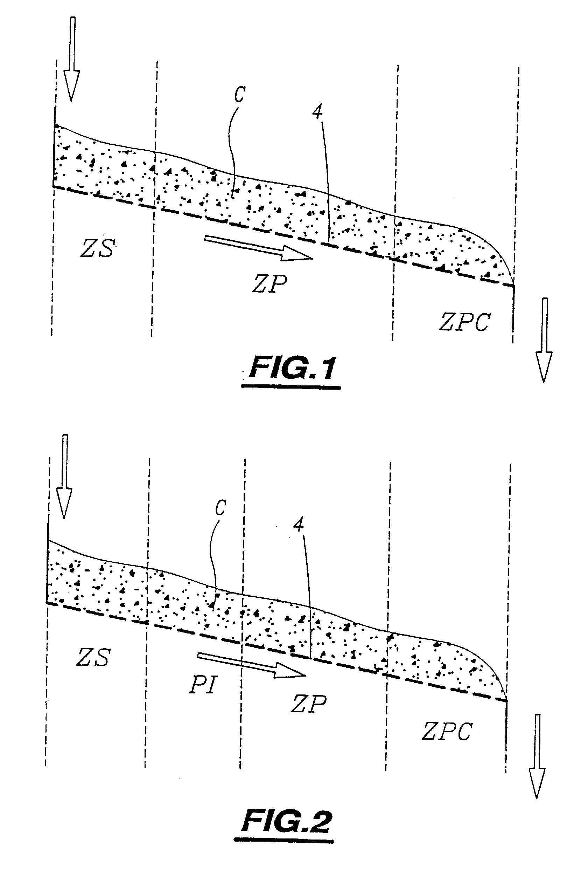

Les figures 1 et 2 illustrent la disposition relative de la zone de post-combustion, selon cette variante de l'invention.

Sur les figures 1 et 2, la référence 4 symbolise la grille pour la circulation des combustibles (C). Les flèches indiquent le sens de progression des combustibles (C). Les combustibles traversent tout d'abord la zone de séchage (ZS). Puis, en sortant de la zone de séchage, ils pénètrent soit directement dans la zone intermédiaire (ZP) ainsi qu'illustré à la figure 1, soit d'abord dans une partie initiale (PI) de la zone de combustion pour déboucher ensuite dans la zone intermédiaire (ZP), ainsi qu'illustré à la figure 2.

Dans les deux cas, en sortie de la zone intermédiaire (ZP), les combustibles pénètrent directement dans la zone de post-combustion (ZPC).

Dans le cas de la figure 2, la zone de séchage (ZS), la zone initiale de la zone de combustion (PI), la zone intermédiaire (ZP) et la zone de post-combustion (ZPC) sont disposées en ligne.

Selon un mode de réalisation préféré, la zone de post-combustion telle que définie ci-dessus comprend au moins la zone d'amélioration des mâchefers telle que définie dans la technique. Selon un autre mode de réalisation de l'invention, ladite zone post-combustion coïncide exactement avec ladite zone d'amélioration des mâchefers.

La mise en oeuvre de l'étape a) est explicitée ci-dessous.

Dans la technique, on admet de façon empirique que l'oxygène nécessaire à la combustion d'une tonne de combustibles varie entre 1.5 et 4 fois la quantité stoechiométrique d'oxygène nécessaire à la réaction de combustion, de préférence entre 2 et 3 fois.

La quantité stoechiométrique est facilement évaluée par l'homme du métier en fonction de la nature des combustibles à incinérer et du débit de ces combustibles. C'est notamment la teneur du combustible en carbone et en hydrogène qui détermine la quantité d'oxygène stoechiométrique, par unité de temps.

Une fois la quantité stoechiométrique évaluée, l'homme du métier peut déterminer de façon empirique la quantité d'oxygène normalement nécessaire à la combustion ainsi que mentionné ci-dessus et placer la zone intermédiaire de combustion dans les conditions souhaitées de manque d'oxygène. Pour ce faire, l'homme du métier utilisera l'un quelconque des moyens à sa disposition.

Une méthode pour ce faire consiste à injecter dans ladite zone intermédiaire un air primaire présentant une teneur réduite en oxygène. Une variante préférée cependant consiste à réduire le débit d'air injecté dans ladite zone intermédiaire et, ceci, en maintenant constants tous les autres paramètres de la combustion tels que le débit des combustibles.

A titre d'indication, la quantité d'oxygène injectée par unité de temps dans ladite zone intermédiaire représente seulement de 30 à 70%, mieux encore de 40 à 60% de la quantité stoechiométrique nécessaire par unité de temps à la combustion des combustibles.

Selon l'invention, les combustibles sortant de la zone intermédiaire pénètrent dans la zone de post-combustion pour être soumis à une combustion accélérée. Plus précisément, l'air injecté dans zone de post-combustion est enrichi en oxygène. Avantageusement, la concentration en oxygène de l'air enrichi n'est pas supérieure à 50% en volume. Une teneur supérieure n'est techniquement pas souhaitable.

Ainsi, la concentration volumique en oxygène de l'air utilisée au niveau de la zone post-combustion est comprise entre 21 et 50%, la limite inférieure correspondant à la concentration en oxygène de l'air non enrichi. De préférence, cette concentration varie entre 23 et 30% en volume, mieux encore entre 23 et 27%, par exemple environ 25%.

De manière particulièrement avantageuse, la concentration en oxygène de l'air enrichi utilisé au niveau de la zone de post-combustion augmente dans le sens d'avancement des combustibles. De cette façon, la cinétique de combustion est optimale. Ainsi, si la concentration en oxygène de l'air injecté au niveau de l'entrée de la zone de post-combustion est de 30%, cette concentration sera maintenue supérieure à 30% dans la zone de post-combustion.

L'injection de l'air enrichi en oxygène au niveau de la zone de post-combustion permet une réduction pratiquement totale des imbrûlés dans les mâchefers. Il en résulte notamment une très forte réduction des émissions de dioxines et/ou furanes.

Il doit être entendu toutefois que le traitement réalisé dans la zone intermédiaire a également pour effet de limiter la formation de dioxines et de furanes, dans les fumées émises, par réduction de la quantité des cendres volantes entraînées avec les fumées d'incinération. La partie des dioxines et furanes qui se forment par catalyse en présence des catalyseurs habituellement contenus dans les cendres volantes est ainsi grandement réduite.

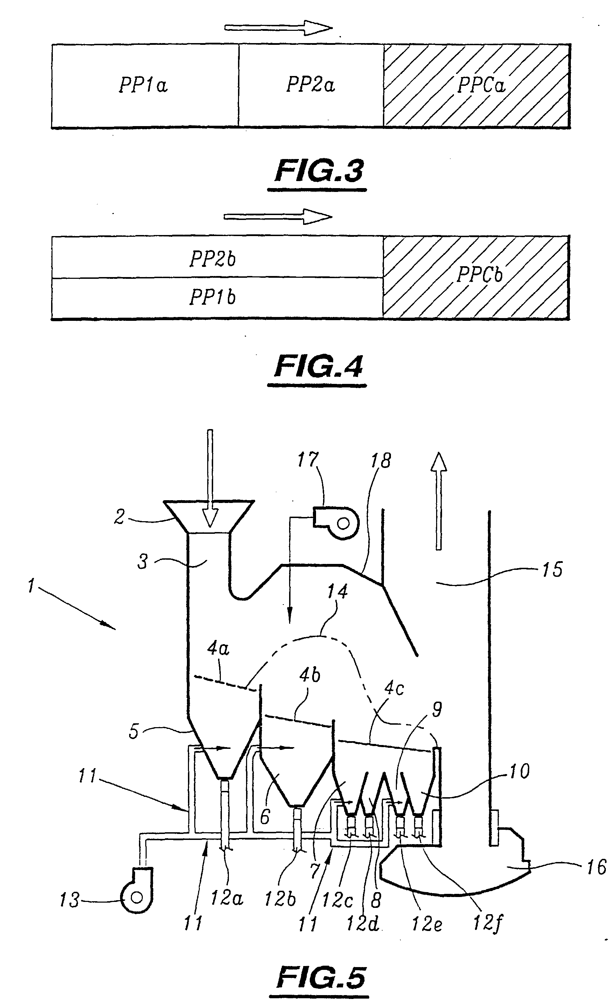

Les deux modes de réalisation de l'invention sont décrits maintenant en référence aux figures 3 et 4 sur lesquelles la couche de combustibles traversant la zone de combustion a été représentée.

Plus précisément, les figures 3 et 4 représentent une vue schématique prise en coupe verticale de la couche de combustibles. L'air est injecté dans la zone de combustion au sein de la couche de combustibles, par en dessous et dans une direction ascendante perpendiculaire au sens d'avancement des combustibles.

La figure 3 illustre la technique dite parallèle alors que la figure 4 illustre la technique dite perpendiculaire. Dans les deux cas, la flèche symbolise le sens d'avancement des combustibles.

Sur la figure 3, la partie hachurée PPCa de la zone de combustion représente la zone de post-combustion telle que définie ci-dessus. La première partie de la zone de combustion est subdivisée quant à elle en deux zones : une zone PPla dans laquelle l'air injecté assure une combustion complète et une zone PP2a dans laquelle l'air injecté est insuffisant pour la combustion complète des combustibles la traversant. La zone PPla correspond à la partie initiale de la zone de combustion, telle que définie ci-dessus et la zone PP2a correspond à la zone intermédiaire telle que définie ci-dessus.

Bien que le procédé de l'invention soit décrit sans référence à une quelconque théorie, il est probable que la réduction des émissions d'oxydes d'azote soit obtenue dans la zone PP2a dans le cas de la technique parallèle.

Dans la zone PPla, la combustion est réalisée en présence d'une quantité d'oxygène suffisante. La combustion des combustibles a lieu avec libération d'oxydes d'azote. Dans la zone PP2a, la combustion est ralentie. Les matières volatiles libérées pendant cette pyrolyse se mélangent avec les produits de la combustion issus de la zone PPla et le résultat est une réduction des oxydes d'azote formés.

De manière préférée, la zone PP2a représente 10 à 40% de la zone de combustion, c'est à dire du volume total occupé par les zones PP1a+PP2a+PPCa. Dans ce cas, la zone de post-combustion PPCA représente 20 à 60% de la zone de combustion (PP1a+PP2a+PPCa).

Sur la figure 4, la partie hachurée de la zone de combustion PPCb représente la zone de post-combustion. La zone intermédiaire telle que définie ci dessus comprend les deux zones superposées PP1b et PP2b.

Dans le cas de la technique perpendiculaire, l'air injecté dans la zone principale par unité de surface de grille est insuffisant pour permettre la combustion des combustibles traversant ladite unité de surface. Schématiquement, l'oxygène injecté suffit à la combustion des combustibles situés dans la zone PP1b qui représente la couche de combustibles immédiatement au dessus des dispositifs d'injection d'air primaire. Les combustibles situés dans la zone PP2b restent en tout ou partie sous la forme d'imbrûlés.

Là encore, les inventeurs ne souhaitent pas limiter l'invention eu égard à une quelconque théorie. Il est probable que dans la zone PP1b, tout l'oxygène disponible ait été consommé. Dans la zone PP2b, la pyrolyse des combustibles a lieu, ce qui conduit à un résultat analogue à celui obtenu dans la zone PP2a dans le cas de la technique parallèle. Ainsi, les oxydes d'azote formés dans la zone PPlb sont réduits dans la zone PP2b.

De manière préférée, le volume occupé par les zones PPla et PP2b représente de 40 à 80%, de préférence de 50 à 70%n, de la zone de combustion, c'est à dire du volume total occupé par les zones PP1a+PP2b+PPCb.

On notera qu'un mode de réalisation particulièrement préféré dans le cas de la technique parallèle consiste à injecter, dans la partie initiale de la zone de combustion laquelle est adjacente à la zone intermédiaire et située en amont de celle-ci, de l'air enrichi en oxygène. La teneur maximale en oxygène de l'air enrichi ne dépassera pas de préférence 50% en volume. Plus particulièrement, la concentration en oxygène de l'air enrichi injecté dans ladite partie initiale sera comprise entre 23 et 30%, mieux encore entre 23 et 27% en volume, par exemple environ 25%.

Dans le cas où de l'air enrichi en oxygène est injecté dans ladite partie initiale, on pourra également injecter un air enrichi en oxygène dans la zone intermédiaire. Dans ce cas, les conditions souhaitées de défaut d'oxygène, sont assurées en jouant sur le débit d'air injecté.

Le procédé de l'invention peut être mis en oeuvre quel que soit le mode d'évacuation des fumées. On distingue les fours à contre-courant où le carneau d'évacuation des fumées se situe près de l'entrée de la zone de combustion, les fours à co-courant où l'évacuation des fumées s'effectue en aval, c'est à dire en sortie de la zone de combustion, et les fours à courant central où le carneau est positionné au milieu de la zone de combustion. Dans tous les cas, le procédé de l'invention conduit à une réduction des émissions d'oxydes d'azote, de dioxines et de furanes, et ceci que ce soit par utilisation de la technique parallèle ou de la technique perpendiculaire.

Néanmoins, lorsque le four à grilles utilisé présente des grilles refroidies à l'eau, la mise en oeuvre du procédé de l'invention par application de la technique perpendiculaire est préférée.

De même, chaque fois que des concentrations élevées en oxygène dans l'air injecté au niveau de la zone de post-combustion sont souhaitées, on préfère utiliser la technique perpendiculaire.

La figure 5 est en vue schématique prise en coupe verticale d'un four à grilles 1 de type VOLUND fonctionnant à co-courant. Les combustibles sont introduits dans le four au niveau de la trémie de chargement 2 en forme de tronc de cône renversé. Les combustibles sont entraînés par gravitation par le goulotte de descente 3 au niveau d'une grille VOLUND 4. La grille 4 comprend trois gradins légèrement inclinés 4a, 4b,et 4c, dont les plans sont constitués de longerons (non représentés) alternativement fixes et mobiles et animés d'un mouvement longitudinal pour la progression des combustibles le long de la grille VOLUND 4. Sous la grille 4 se trouve un ensemble de caissons 5 à 10 reliés d'une part à un dispositif 11 pour l'injection d'air primaire et d'autre part, à un dispositif pour la récupération des poussières ou autres éléments fins passant à travers les interstices de la grille 4.

Le dispositif 11 pour l'injection d'air primaire comprend un ventilateur 13 et des conduits pour l'alimentation des caissons en air primaire. Ces conduits débouchent respectivement dans les caissons 5 à 10.

Le dispositif de récupération les poussières n'est pas représenté sur la figure. Seuls figurent les conduits 12a à 12f acheminant les poussières recueillies au fond des caissons 5 à 10 jusqu'à un dispositif d'évacuation, et par exemple jusqu'à un extracteur à scories 16.

La courbe 14 délimite grossièrement le foyer de combustion. Les mâchefers sont récupérés dans l'extracteur à scories 16. Les fumées d'incinération s'échappent du four par la conduite d'évacuation 15.

En cours de fonctionnement de l'incinérateur, l'air primaire est injecté au dessous de la grille 4 via les caissons 5 à 10. Parallèlement, de l'air secondaire est injecté au dessus du foyer de combustion au moyen d'un ventilateur 17 disposé au niveau de la voûte supérieure 18 du four. Il est également envisageable d'injecter un air de refroidissement latéral au niveau des parois latérales du four. Cet air est communément désigné air tertiaire dans la technique.

La mise en oeuvre du procédé de l'invention passe par le conduit des flux d'oxygène alimentant la zone de combustion, c'est à dire le contrôle des débits d'air et le contrôle de la concentration en oxygène de l'air injecté sous les parties 4b et 4c de la grille 4.

Le procédé de l'invention convient plus particulièrement à l'incinération des déchets et, par exemple, à l'incinération des ordures ménagères.

Pour le calcul de la quantité stoechiométrique d'oxygène, on tiendra compte des deux composantes essentielles des déchets que sont le carbone et l'hydrogène. Selon l'invention, le terme déchets regroupe trois types essentiels de constituants : les combustibles, les matières inertes et l'eau. Les matières combustibles sont des éléments à base de carbone et d'hydrogène à fort pouvoir calorifique, indispensables à la combustion. Des exemples en sont le papier, le bois, les végétaux et les plastiques. Les matières inertes constituent l'essentiel des mâchefers. Ce sont des substances qui ne brûlent pas, à base de matières minérales telles que le verre, les cailloux, ou les faïences, ou à base de métaux. L'eau vient rejoindre les gaz de combustion sous forme de vapeur.

### EXEMPLE :

Le four utilisé est un four de type VOLUND tel que représenté à la figure 5 Il est utilisé pour la combustion de déchets.

Dans cet exemple, la zone de séchage (au niveau de la grille 4a) a été alimentée de façon continue en air à un débit moyen de 1000 à 1400 Nm³/h.

La quantité d'oxygène injectée par unité de temps au niveau de la grille 4b, laquelle délimite, dans le cadre de cet exemple, la zone intermédiaire, a été réglée de façon à assurer une combustion incomplète des déchets traversant ladite zone de combustion intermédiaire.

Toujours dans le cadre de cet exemple, la grille 4c délimite la zone de post-combustion.

Au niveau de la zone intermédiaire (à savoir, au niveau de la grille 4b), a été injecté de l'air à 23.8% d'oxygène à un débit moyen de 10300 à 11100 Nm³/h. Au niveau de la zone de post-combustion, le débit d'air a été ramené entre 2000-4000 Nm³/h, l'air injecté présentant la même concentration en oxygène, à savoir 23.8% en volume d'oxygène.

Les conditions expérimentales de cet essai sont résumées dans le tableau suivant :

| **Zone** | **Concentration volumique de l'air en oxygène** | **Débit Nm**^{**3**}**/h** |
|---|---|---|
| **Zone de séchage** | 21% | 1000-1400 |
| **Zone intermédiaire** | 23.8% | 13800-14300 |
| **Zone de post-combustion** | 23.8% | 2000-4000 |

La concentration en monoxyde de carbone dans les fumées à la sortie du four était d'environ 5ppm. La température des fumées à la sortie du four est d'environ 850°C.

A titre de comparaison, la même expérience a été réalisée à partir d'un batch de déchets de compositions équivalente, dans les conditions suivantes :

| **Zone** | **Concentration volumique de l'air en oxygène** | **Débit Nm**^{**3**}**/h** |
|---|---|---|
| **Zone de séchage** | 21% | 1000-1400 |
| **Zone intermédiaire** | 21% | 10300-11100 |
| **Zone de post-combustion** | 21% | 2000-4000 |

La concentration en monoxyde de carbone dans les fumées était beaucoup plus élevée de l'ordre de 35ppm. La température des fumées à la sortie du four est de l'ordre de 800°C.

On observe, par mise en oeuvre du procédé de l'invention, une diminution d'un facteur 3 des émissions de dioxine et de furane.

Ces résultats montrent sans ambiguïté l'amélioration obtenue et la supériorité du procédé de l'invention.

## Revendications

1. Procédé de combustion d'un combustible et d'un comburant, dans lequel au moins une partie du combustible comportant des produits du type hydrocarbure comprenant des atomes de carbone, hydrogène, oxygène et d'un corps X dans la série des halogènes, ladite combustion engendrant des fumées de combustion, caractérisée en ce que l'on maintient la concentration en monoxyde de carbone dans lesdites fumées au dessous d'une valeur de 400 ppm environ, de préférence au dessous d'une valeur de 200 ppm environ, la quantité de comburant injectée dans la zone où se produit la combustion du combustible et du comburant étant suffisante pour créer une température dans cette zone de combustion permettant l'oxydation des atomes de carbone essentiellement et préférentiellement sous la forme de dioxyde de carbone.

2. Procédé selon la revendication 1, caractérisé en ce que le comburant comporte au moins 21% en volume d'oxygène.

3. Procédé selon l'une des revendications 1 ou 2, caractérisé en ce que le comburant est de l'air enrichi en oxygène.

4. Procédé selon l'une des revendications 2 ou 3, caractérisé en ce que l'oxygène comporte au moins 88% en volume d'oxygène pur.

5. Procédé selon la revendication 4, caractérisé en ce que le complément de l'oxygène est essentiellement constitué par un ou plusieurs gaz inertes, préférentiellement l'azote et/ou l'argon.

6. Procédé selon l'une des revendications 2 à 5, caractérisé en ce que l'oxygène comporte au moins 90% en volume d'oxygène pur.

7. Procédé selon l'une des revendications 1 à 6, caractérisé en ce que la concentration monoxyde de carbone est inférieure à 100 ppm et de préférence inférieure à 50 ppm.

8. Procédé selon l'une des revendications 1 à 7, caractérisé en ce que l'on mesure la concentration en monoxyde de carbone dans les fumées au plus tard juste avant leur évacuation de la zone de combustion.

9. Procédé selon la revendication 8 dans lequel la combustion se fait dans un four qui comporte une conduite d'évacuation des fumées de combustion, caractérisé en ce que la mesure de cette concentration s'effectue juste avant la sortie des fumées du four en direction de la conduite d'évacuation.

10. Utilisation du procédé selon l'une des revendications 1 à 9 pour l'incinération de déchets.
